# EUROPEAN PATENT SPECIFICATION

(11) **EP 3 207 312 B1**
(45) Date of publication and mention of the grant of the patent: **26.08.2020**
(21) Application number: 15783996.0
(22) Date of filing: 16.10.2015
(51) Int. Cl.: F23R 3/14, F23R 3/28

(54) **METHOD FOR REDUCING NOX EMISSION IN A GAS TURBINE, AIR FUEL MIXER, GAS TURBINE AND SWIRLER**
VERFAHREN ZUR REDUZIERUNG VON NOX-EMISSIONEN IN EINER GASTURBINE, LUFT-KRAFTSTOFF-MISCHER, GASTURBINE UND DRALLERZEUGER
PROCÉDÉ POUR LA RÉDUCTION DES ÉMISSIONS DE NOX DANS UNE TURBINE À GAZ, MÉLANGEUR AIR-CARBURANT, TURBINE À GAZ ET DISPOSITIF DE TOURBILLONNEMENT

(30) Priority: 17.10.2014 IT CO20140032
(43) Date of publication of application: 23.08.2017
(73) Proprietor: Nuovo Pignone S.r.l., 50127 Florence (IT)
(72) Inventor: CERUTTI, Matteo, I-50127 Florence (IT)
(74) Representative: BRP Renaud & Partner mbB Rechtsanwälte Patentanwälte Steuerberater
(86) International application number: PCT/EP2015/073985
(87) International publication number: WO 2016/059200

(56) References cited:
- US-A- 5 680 766
- US-A1- 2005 268 618
- US-A1- 2010 180 599
- US-A1- 2010 236 252
- US-A1- 2014 033 722

## Description

### TECHNICAL FIELD

Embodiments of the subject matter disclosed herein relates primarily to methods for reducing NOx emissions in a gas turbine.

### BACKGROUND ART

US 2014/0033722 A1 and US 2005/268618 A1 discloses mixers, US 2010/236252 A1 discloses a swirl generator and US 2010/180599 A1 discloses a swirl vane.

In the last years it has become particularly desirable a reduction of gas turbines pollutant emissions, in particular on NOx emissions; more in detail such reduction is particularly needed as a consequence of increasingly stringent government regulation on that matter.

Over the time, in this field, many solutions have been explored in order to reduce the NOx emission; one solution that seems to give good result is the so called "Lean combustion" (i.e. when fuel to air equivalence ratio is kept far below stoichiometric), that represents an effective strategy when flame temperature is properly controlled.

Nevertheless, it is still possible that a given combustor fuel/air mixture is not optimal due to suboptimal mixing profiles resulting from the fuel nozzle hardware: regions of non-ideal mixing can then occur and hot spots can manifest in the combustor, leading to localized near-stoichiometric combustion regions, thus leading to a worsening in the NOx emissions.

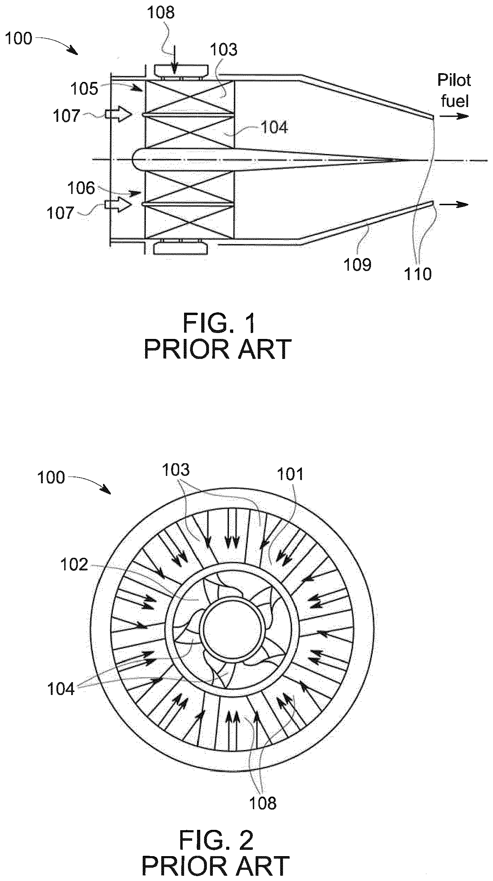

In the known art, in order to promote homogenous fuel/air mixing, swirl stabilized fuel/air mixers have been employed in the gas turbine industry; a particular kind of known air fuel mixer is the one that comprises a dual annular counter rotating swirler (also indicated as DACRS), as shown in fig. 1, 2 and 3.

This air fuel mixer 100 comprises two co-axial annular chambers, one outer chamber 101 and one inner chamber 102; in each chamber a certain number of blades 103, 104 is provided, thereby forming a so-called "swirler": an inner swirler 105 and an outer swirler 106.

Due to the different shape of the blades 103 and 104 of the two swirler 105, 106, at the air flux 107 entering the swirler it is imparted a counter-rotation motion.

The flow of air is then mixed with a flow of fuel (particularly, gas) 108 injected in the chamber 101 of the outer swirler 105: due to the shear layer generated by the counter-rotating swirler 105, 106, high turbulence levels are promoted and are able to improve fuel/air mixing in spite of the low available mixing duct length.

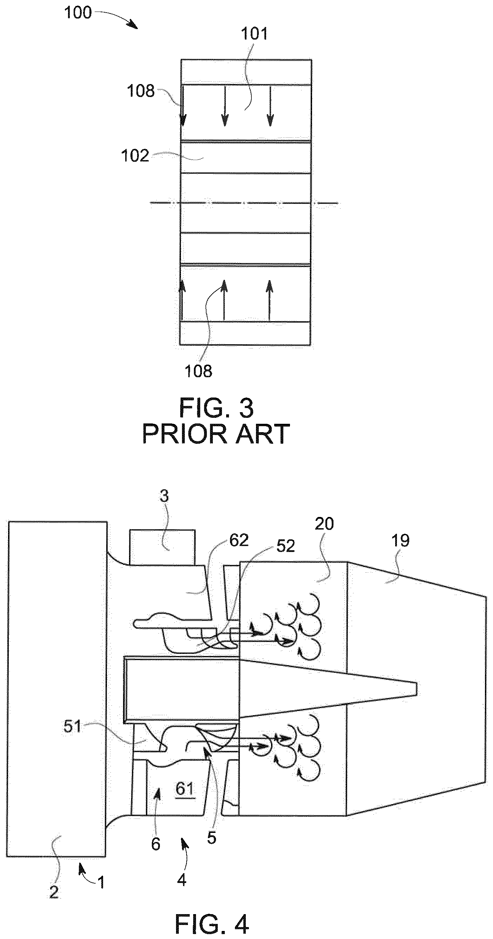

The fuel flow 108 is injected in a transverse direction with respect to the axis of rotation of the swirler, in the vanes between adjacent blades 103 of the outer swirler 105, as can be appreciated in fig. 3.

Other known solution are those described in U.S. patent 5,251,447, in which a DACRS is used, and the fuel is injected axially (in a direction parallel to the axis of rotation of the swirlers) inside the outer chamber.

Another known solution is the one shown in U.S. patent 5,351,447, in which, in an air fuel mixer provided by a DACRS, the fuel is supplied both in the outer chamber and, sprayed axially, at the intersection of the inner and outer swirlers, downstream of the latter.

Trying to summarize, the main aim of the known solutions, is to improve the air fuel mixing action, in those areas in which the localized near-stoichiometric combustion regions are present: in this sense, a criteria that seems to be in common, in the known solutions, is to improve this mixing action in the outer part of the mixer, where the undesired regions of non-ideal mixing and hot spots are present.

Although those known solutions are in general effective, an even further reduction in NOx emission is desirable.

Moreover, those kind of known air fuel mixer are particularly sensitive to manufacturing variability, since the working tolerances can strongly impact on the overall performance of the mixer; it can happen that in the same lot of air fuel mixer made by the same manufacturer, high differences in terms of performance between one mixer and another is shown, thus high refurbishing costs.

### SUMMARY

The present invention is defined in the accompanying claims.

To achieve a further better reduction in NOx emissions, when using an air fuel mixer provided by a dual annular counter rotating swirler, an important idea is to inject the flow of fuel in the inner chamber of the internal swirler.

According to the invention, an important idea is to inject the flow of fuel solely in the inner chamber of the internal swirler, therefore depriving the outer swirler of any fuel (gas) injection.

It has been discovered, and tested, that by feeding the inner chamber of the dual annular counter rotating swirler enhances the mixing action between fuel and air and allows for a NOx reduction.

### BRIEF DESCRIPTION OF DRAWINGS

The accompanying drawings, which are incorporated herein and constitute a part of the specification, illustrate exemplary embodiments of the present invention and, together with the detailed description, explain these embodiments. In the drawings:
Fig.1 shows a cross-section of an air fuel mixer according to known art,
Fig.2 shows a front view of an air fuel mixer according to known art,
Fig.3 shows a cross-section of a detail of the mixer of fig. 1,
Fig.4 shows a cross-section of an air fuel mixer according to an embodiment of the invention,
Fig.5 shows a perspective view of a dual annular counter-rotating swirler comprised in the mixer of the embodiment of fig. 4,
Fig. 6 and 7 show sectional views of the dual annular counter-rotating swirler of fig. 5, taken along two different sectional planes,
Fig. 8 shows a fuel concentration profiles comparison between the air fuel mixer of fig. 4 and known mixers, and
Fig. 9 shows NOx emission comparison between the air fuel mixer of fig. 4 and known mixers.

### DETAILED DESCRIPTION

The following description of exemplary embodiments refers to the accompanying drawings.

The following description does not limit the invention. Instead, the scope of the invention is defined by the appended claims.

Reference throughout the specification to "one embodiment" or "an embodiment" element that a particular feature, structure, or characteristic described in connection with an embodiment is included in at least one embodiment of the subject matter disclosed. Thus, the appearance of the phrases "in one embodiment" or "in an embodiment" in various places throughout the specification is not necessarily referring to the same embodiment. Further, the particular features, structures or characteristics may be combined in any suitable manner in one or more embodiments.

The method according to the invention is a method for reducing NOx emissions in a gas turbine in which a flow of primary air and a flow of fuel (gas) are fed into a dual annular counter rotating swirler, said primary air flow being fed into both the inner and outer annular chambers, and it is provided to inject the flow of fuel into the inner annular chamber.

This method allows for a better mixing action and a reduction in NOx, since the fuel can be injected in the whole mass of air entering the swirler.

According to said method, it is provided to inject the flow of fuel within the dual annular counter rotating swirler, solely into the inner chamber, thereby depriving the outer chamber of any fuel injection or supply.

The term "within" the swirler is used for indicating an area "upstream" the end of the swirler with reference to the air flow direction from the inlet to the outlet; the term "end of the dual annular counter rotating swirler" indicate the section (perpendicular to the axis of the swirler) of the mixer in which the blades of the swirler ends.

It must be noted that, downstream of the end of the swirler, there can be other fuel injection points in the flow of air, for example if pilot fuel is used: those others fuel injection, in any case, are outside the swirler, particularly downstream the end of the swirler itself.

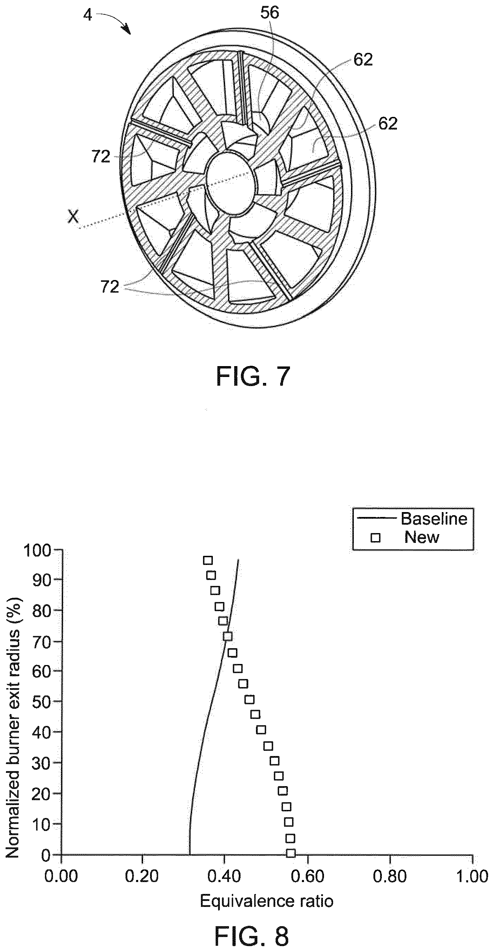

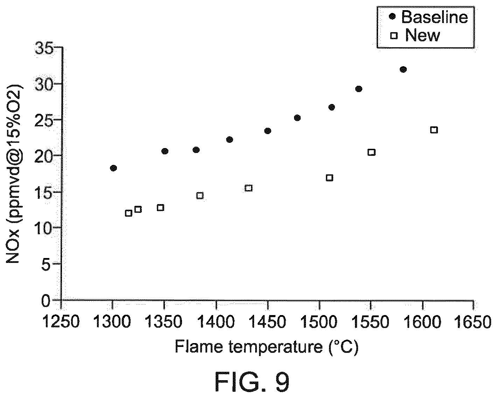

Particularly, according to the test result (with reference to fig.8 and 9) it has shown that, thanks to the injection of fuel solely (when considering the area upstream of the end of the swirler itself) in the inner chamber of the swirler, an even better mixing action between fuel and primary air is obtained, so that an optimal fuel concentration profile can be reached, that avoid hot spot or localized near-stoichiometric combustion regions and, therefore, a reduction in NOx emissions: the rich peak has been found moved toward the axis. This allows to have a leaner mixture interacting with the pilot diffusive combustion modality, and lead to have a positive influence of NOx reduction.

It has shown to be particularly interesting to inject the flow of fuel, at least at an injection point in the inner chamber, said injection point being located adjacent to the outer annular chamber: in this way the fuel is injected in the vicinity of the intense shear region between the inner and outer swirler and the strong turbulence helps in an even better fuel air mixing.

To this extent it would be interesting to inject the fuel at the dividing hub between the inner swirler and the outer swirler, on the side of the inner swirler.

Preferably there is a plurality of injection points located in this way; in particular, a very advantageous solution is to provide two fuel injection points for each vane defined by two adjacent blades of the inner swirler; in this way, the whole fuel flow (for each inner vane) can be sub-divided in two parts for better results in mixing with air.

In that case, it is optionally and advantageously provided to have, for each vane of the inner chamber, an injection of a first flow of fuel that is greater than an injection of a second flow of fuel; particularly, for each vane of the inner chamber, the first flow of fuel is injected near the inlet section of the swirler (i.e. where the swirler blades begin), while the second flow of fuel is injected near the outlet section of the swirler (where the swirler blades end) of the swirler.

Although it would be in principle possible to inject the fuel in the inner chamber in a variety of ways, it has been found that a particularly advantageous solution is to inject the flow of fuel in a transverse direction with respect to a swirler axis and toward it. The direction of the flow of fuel is consequently centripetal.

The supplying path for feeding such fuel into the inner chamber can vary, but tests have shown that it would be particularly interesting to supply the fuel into the inner chamber at least through a transverse supplying path passing in the outer chamber and ending in the inner chamber.

In this way, it is possible to feed each inner vane defined between two adjacent blades of the inner swirler by at least one transverse supplying path, or, in an alternative solution, by two transverse supplying paths.

It must be noted that, in principle it would be also possible to have also three, four or more supplying paths and/or injection points for each vane of the internal chamber, although augmenting their number would be subjected to balance with the need for a relatively simply construction.

Preferably, when each outer blade 62 is provided by one supplying pipe (either the first one or the second one), outer blades 62 having a first supplying pipe 71 are alternated with outer blades having a second supplying pipe 72; the first supplying pipes 71 have a larger passage area than the second supplying pipes 72; all the first supplying pipes 71 are alined on a first common plane and all the second supplying pipes 72 are alined on a second common plane, the first plane being nearer the air inlet of the swirler than the second plane. Since in this embodiment the number of outer blades is double than the number of inner blades, for each inner vane two supplying pipes are provided, particularly one first supplying pipe 71 and one second supplying pipe 72.

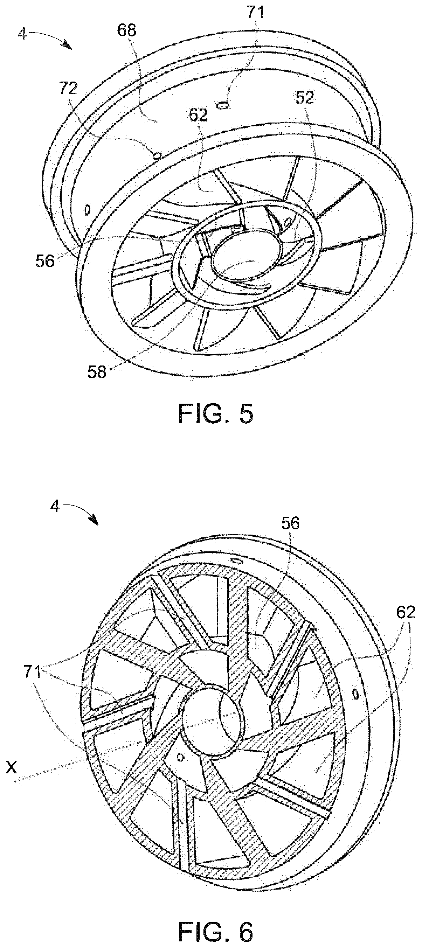

Another embodiment of the subject matter herein disclosed is an air fuel mixer, described in the following with reference to Fig. 5-7.

The air fuel mixer 1 for gas turbine, comprises a primary air duct 2 for supplying primary air and a fuel duct 3 for supplying fuel, particularly gas.

It has to be understood that, in the accompanying figures, such ducts 2 and 3 are drawn only for illustrative purposes and their shape or position can vary according to the circumstances; for example the fuel duct 3 can be simply in the form of a manifold suitable for being coupled to a fuel supply line (not shown) of the plant.

The air fuel mixer 1 comprises a dual annular counter rotating swirler 4; it is not important to the extent of the advantages in NOx reduction, if such dual annular counter rotating swirler is of the axial, radial or axial/radial type.

Such swirler 4 comprises one inner 5 and one outer 6 swirler, co-axial each other, around the axis X as shown in fig. 6 and 7.

The inner swirler 5 is housed inside the outer swirler 6, being of a reduced diameter with respect to the latter.

The inner swirler comprises one annular inner chamber 51 and inner blades 52 housed in said inner chamber 51.

The outer swirler 6, concentric with the inner one 5, comprises on its turn an annular outer chamber 61 and outer blades 62 housed in said outer chamber 61.

The primary air duct 2 is operatively connected (or in flow communication) with the inner swirler 5 and the outer swirler 6; the flow of primary air is therefore ideally sub-divided in two counter-rotating fluxes thanks to the different shape and orientation of the inner and outer blades 52, 62.

The inner and outer chambers 51, 61 are both defined in part by the dividing hub 56; the outer chamber 61 is then defined also by the external hub 68, while the inner chamber 51 is defined also by the internal hub 58.

Inner blades 52 therefore are coupled (preferably monolithic with) the internal hub 58 and the dividing 56 hub, while outer blades are coupled (preferably monolithic with) the dividing hub 56 and the external 68 hub.

According to the embodiment herein disclosed, the air fuel mixer 1 further comprises a fuel supplying element operatively connected to said fuel duct 3, said fuel supplying element being adapted to supplying fuel inside the inner chamber 51.

According to particularly advantageous embodiment, the outer chamber 61 is deprived of any fuel injecting element.

In other words, within (in the sense of "upstream the end of') the swirler the fuel supplying element consists of at least one pipe (or duct) operatively connected to the duct 3 and ending (opened) in the inner chamber 51, for supplying fuel only in said inner chamber 51; opening of the fuel supplying element in the inner chamber can therefore be considered as an "injection point".

In this way, the fuel supplying element defines the fuel supplying path for feeding such fuel into the inner chamber.

In a preferred but not limiting embodiment, the fuel supplying element comprises a first transverse fuel supplying pipe 71 and a second transverse fuel supplying pipe 72 in two different and adjacent blades 62 of the outer swirler 6; in this way, there is obtained a transverse fuel supplying path.

The term "transverse" is used here for indicating a direction substantially resting on a plane that has the axis X of the swirler as a perpendicular line.

More in general, according to the subject matter, there can be a different number of fuel supplying pipe for supplying fuel in the inner chamber 51: only one fuel supplying pipe, two, three or more fuel supplying pipe, also shaped in a different way with respect to those of the figures or even not housed inside the blades 62, but, for example provided as dedicated ducts passing near the blades (or in other positions in which, preferably, they do not interfere with the rotation imparted to the primary air flow by the blades of the swirler 4).

In the advantageous embodiment shown in the appended figures, the first and second transverse fuel supplying pipes 71, 72 are housed at least in part, preferably completely, inside the outer blades 62, as can be best seen in figures 6 and 7.

Each fuel supplying pipe 71, 72 is provided by an inlet located on the external hub 68 and an outlet located on the dividing hub 56 on the inner chamber side of the latter: in this way, in use, each fuel supplying pipe 71, 72 can be fed through the inlet (operatively connected with the fuel duct 3) and injects fuel in the inner chamber 51 by the outlet on the dividing hub 56.

Preferably, the fuel supplying pipes 71, 72 provide a transverse path with respect to the axis X of the swirler (see figures 6 and 7).

In the advantageous embodiment shown in the appended figures, there is a plurality of first fuel supplying pipes 71 (shown in the cross section of fig. 6) all alined on a common first plane, and a plurality of second fuel supplying pipes 72 (shown in the cross section of fig. 7) all alined on a common second plane. Both the first and second common planes are parallel (and distinct) to each other and are perpendicular to the axis X of the swirler.

Preferably, each fuel supplying pipe 71, 72 is shaped as a straight hole in the outer blade, the axis of said hole being substantially tangential with respect to the internal hub 58.

The term "substantially tangential" is used herein for indicating that the direction referred to is not properly "tangential" to the hub itself -since the outlet must open in the hub 56- but has an orientation very close to the tangential one, for example forming an angle comprised between 10-15° with the direction tangential to the internal hub 58.

In another different embodiment, each fuel supplying pipe 71, 72 is shaped as a straight hole in the outer blade, the axis of said hole being substantially radial with respect to the dividing hub 56.

The embodiment in which the fuel supplying pipe is a straight hole in the outer blade has shown interesting advantages for what concern the sensibility to manufacturing processes: realizing straight hole with a certain diameter is nevertheless quite a simple operation with reduced errors in manufacturing, thus leading to more predictable result in term of finishing and precision dimensioning.

In the advantageous embodiment shown in the appended figures, the diameters of the first and second supplying pipes 71, 72 are different, one being larger than the other one; particularly, the fuel supplying pipe 71 having its outlet nearer the primary air inlet has the larger diameter; this allows to feed the major part of fuel flow nearer the air inlet and obtain a better mixing. The diameters are comprised between 1,8 and 2,0 mm, preferably 1,4 mm

More in general, it can be said that, if the first and second transverse fuel supplying pipe 71, 72 are not circular, then, the first transverse fuel supplying pipe 71 has a passage area bigger than the second transverse fuel supplying pipe passage area.

The air fuel mixer 1 can further comprise, as shown, a converging duct 19 as well as a coaxial pilot on air fuel mixer tip.

An additional, though optional, feature is to provide, immediately downstream of the end of the swirler 4, a cylindrical portion of the duct 21, immediately upstream of the converging duct 19, as shown in fig. 4.

Since pilot are provided on the fuel mixer tip (at the end of the converging duct 19), the effect of the cylindrical portion of the duct 21 is to allow a certain residence time for the air and fuel mix, so as to enhance further the mixing of the two before their arrival to the pilot and the combustion.

Finally, when looking at the tests results of fig. 8, one can immediately appreciate the fuel concentration profile between one known solution (continuous black line) and the the one herein disclosed (white squares); this allows, briefly, to gain the advantages in terms of NOx reduction that are well apparent from fig. 9; in the latter a visual comparison between a known solution (black dots) and the present one (white squares) of NOx emissions in relation to the flame temperature clearly shows the achieved reduction.

## Claims

1. A method for reducing NOx emissions in a gas turbine in which a flow of primary air and a flow of fuel are fed into an air fuel mixer (1) equipped at least by a dual annular counter rotating swirler (4) having inner and outer annular chambers (51, 61), said primary air flow being fed into the inner and outer annular chambers (51, 61),
wherein the method comprises the step of centripetally injecting the flow of fuel only into the inner annular chamber (51) of the swirler via an injection point located in the inner annular chamber (51) adjacent to the outer annular chamber (61) and the outer chamber (61) is deprived of any fuel injecting element.

2. The method of claim 1, in which it is provided to inject the flow of fuel in a transverse direction with respect to a swirler axis.

3. The method of one or more of the preceding claims, comprising the step of supplying the flow of fuel into the inner chamber (51) at least through a transverse supplying path passing in the outer chamber (61) and ending in the inner chamber (51).

4. The method of one or more of the preceding claims, wherein the swirler (4) comprises outer blades (62) housed in the outer chamber (61) and outer vanes defined by two adjacent outer blades, in which each outer blade (62) is provided with at least one transverse supplying path.

5. The method of one or more of the preceding claims, wherein the swirler (4) comprises inner blades (52) housed in the inner chamber (51) and inner vanes defined by two adjacent inner blades (52), the fuel being injected into each inner vane through two transverse supplying paths.

6. An air fuel mixer (1) for gas turbine, comprising:
a primary air duct (2) for supplying primary air,
a fuel duct (3) for supplying fuel, particularly gas,
a dual annular counter rotating swirler (4), on its turn comprising one inner swirler (5) and one outer swirler (6) co-axial each other and respectively comprising an inner chamber (51) and an outer chamber (61),
said primary air duct (2) being in flow communication with the inner swirler (5) and the outer swirler (6),
wherein said air fuel mixer (1) further comprises a fuel supplying element (71,72) operatively connected to said fuel duct (3), said fuel supplying element (7) being adapted to
supply fuel only inside said inner chamber (51) and the outer chamber (61) is deprived of any fuel injecting element.

7. The air fuel mixer (1) of claim 6, wherein the fuel supplying element (71,72) consists of at least one pipe operatively connected to the fuel duct (3) and ending in the inner chamber (51).

8. The air fuel mixer (1) of claim 6 or 7, wherein said fuel supplying element (71,72) passes at least in part, preferably completely, through the outer chamber (61).

9. The air fuel mixer (1) of claim 8, wherein the outer swirler (6) comprises outer blades (62), wherein the fuel supplying element (71, 72) comprises a first transverse fuel supplying pipe (71) housed at least in part, preferably completely, inside said outer blades (62).

10. The air fuel mixer (1) of claims 8 or 9, wherein the fuel supplying element (71, 72) further comprises a second transverse fuel supplying pipe (72) housed at least in part, preferably completely, inside said outer chamber (61), preferably inside said outer blades (62).

11. The air fuel mixer (1) of claim 9 or 10, in which said dual annular counter rotating swirler comprises a dividing hub (56) between said inner and outer chamber, said fuel supplying pipe (71,72) opening in the inner chamber at said dividing hub.

12. The air fuel mixer (1) of claims 9 and 10, wherein said first transverse fuel supplying pipe (71) is near to said primary air duct (2) and said second transverse fuel supplying pipe (72) is remote from said primary air duct (2), said first transverse fuel supplying pipe (71) having a passage area bigger than said second transverse fuel supplying pipe passage area.

13. The air fuel mixer (1) of any claims 7 to 12, wherein the at least one pipe has a diameter comprised between 1,8 and 2,0 mm, preferably 1,4 mm.

14. A gas turbine comprising an air fuel mixer according to any of claims from 6 to 13.

15. A dual annular counter rotating swirler, comprising one inner swirler (5) and one outer swirler (6) co-axial each other and respectively comprising an inner chamber (51) housing inner blades and an outer chamber (61) housing outer blades, wherein the swirler comprises fuel supplying elements (71,72) adapted to supply fuel only inside said inner chamber (51) and the outer chamber (61) is deprived of any fuel injecting element.

## Patentansprüche

1. Verfahren zum Reduzieren von NOx-Emissionen in einer Gasturbine, in der ein Strom primärer Luft und ein Kraftstoffstrom in einen Luft-Kraftstoff-Mischer (1) geleitet werden, der mit mindestens einem dualen ringförmigen gegenläufig drehenden Drallerzeuger (4) ausgestattet ist, der eine innere und eine äußere Ringkammer (51, 61) aufweist, wobei der primäre Luftstrom in die innere und äußere Ringkammer (51, 61) geleitet wird,
wobei das Verfahren den Schritt des Zentripetaleinspritzens des Kraftstoffstroms nur in die innere Ringkammer (51) des Drallerzeugers über eine in der inneren Ringkammer (51) angeordnete Einspritzstelle benachbart zur äußeren Ringkammer (61) umfasst und die äußere Kammer (61) kein Kraftstoffeinspritzelement aufweist.

2. Verfahren nach Anspruch 1, bei dem vorgesehen ist, den Kraftstoffstrom in einer Querrichtung in Bezug auf eine Drallerzeugerachse einzuspritzen.

3. Verfahren nach einem oder mehreren der vorstehenden Ansprüche, umfassend den Schritt des Zuführens des Kraftstoffstroms in die innere Kammer (51) durch mindestens einen quer verlaufenden Zufuhrweg, der in die äußere Kammer (61) führt und in der inneren Kammer (51) endet.

4. Verfahren nach einem oder mehreren der vorstehenden Ansprüche, wobei der Drallerzeuger (4) in der äußeren Kammer (61) untergebrachte äußere Leitschaufeln (62) und durch zwei benachbarte äußere Leitschaufeln definierte äußere Laufschaufeln umfasst, wobei jeder äußeren Laufschaufel (62) mindestens ein quer verlaufender Zufuhrweg bereitgestellt ist.

5. Verfahren nach einem oder mehreren der vorstehenden Ansprüche, wobei der Drallerzeuger (4) in der Innenkammer (51) untergebrachte innere Leitschaufeln (52) und durch zwei benachbarte innere Leitschaufeln (52) definierte innere Laufschaufeln umfasst, wobei der Kraftstoff durch zwei quer verlaufende Zufuhrwege in jede innere Laufschaufel eingespritzt wird.

6. Luft-Kraftstoff-Mischer (1) für Gasturbine, umfassend:
einen primären Luftkanal (2) zum Zuführen primärer Luft,
einen Kraftstoffkanal (3) zum Zuführen von Kraftstoff, insbesondere Gas,
einen dualen ringförmigen gegenläufig drehenden Drallerzeuger (4), der seinerseits einen inneren Drallerzeuger (5) und einen äußeren Drallerzeuger (6) umfasst, die koaxial zueinander sind und jeweils eine innere Kammer (51) und eine äußere Kammer (61) umfassen,
wobei der primäre Luftkanal (2) in Strömungsverbindung mit dem inneren Drallerzeuger (5) und dem äußeren Drallerzeuger (6) steht,
wobei der Luft-Kraftstoff-Mischer (1) ferner ein Kraftstoffzufuhrelement (71, 72) umfasst, das operativ mit dem Kraftstoffkanal (3) verbunden ist, wobei das Kraftstoffzufuhrelement (7) zum Zuführen von Kraftstoff nur im Inneren der inneren Kammer (51) angepasst ist und die äußere Kammer (61) kein Kraftstoffeinspritzelement aufweist.

7. Luft-Kraftstoff-Mischer (1) nach Anspruch 6, wobei das Kraftstoffzufuhrelement (71, 72) aus mindestens einer Leitung besteht, die operativ mit dem Kraftstoffkanal (3) verbunden ist und in der inneren Kammer (51) endet.

8. Luft-Kraftstoff-Mischer (1) nach Anspruch 6 oder 7, wobei das Kraftstoffzufuhrelement (71, 72) mindestens teilweise, vorzugsweise vollständig, durch die äußere Kammer (61) verläuft.

9. Luft-Kraftstoff-Mischer (1) nach Anspruch 8, wobei der äußere Drallerzeuger (6) äußere Laufschaufeln (62) umfasst, wobei das Kraftstoffzufuhrelement (71, 72) eine erste quer verlaufende Kraftstoffzufuhrleitung (71) umfasst, die mindestens teilweise, vorzugsweise vollständig, innerhalb der äußeren Laufschaufeln (62) untergebracht ist.

10. Luft-Kraftstoff-Mischer (1) nach den Ansprüchen 8 oder 9, wobei das Kraftstoffzufuhrelement (71, 72) ferner eine zweite quer verlaufende Kraftstoffzufuhrleitung (72) umfasst, die mindestens teilweise, vorzugsweise vollständig, innerhalb der äußeren Kammer (61), vorzugsweise innerhalb der äußeren Laufschaufeln (62) untergebracht ist.

11. Luft-Kraftstoff-Mischer (1) nach Anspruch 9 oder 10, bei dem der duale ringförmige gegenläufig drehende Drallerzeuger eine teilende Nabe (56) zwischen der inneren und äußeren Kammer umfasst, wobei die Kraftstoffzufuhrleitung (71, 72) sich an der teilenden Nabe in die innere Kammer öffnet.

12. Luft-Kraftstoff-Mischer (1) nach den Ansprüchen 9 und 10, wobei sich die erste quer verlaufende Kraftstoffzufuhrleitung (71) nahe dem primären Luftkanal (2) befindet und sich die zweite quer verlaufende Kraftstoffzufuhrleitung (72) entfernt von dem primären Luftkanal (2) befindet, wobei die erste quer verlaufende Kraftstoffzufuhrleitung (71) einen größeren Durchgangsbereich als der Durchgangsbereich der zweiten quer verlaufenden Kraftstoffzufuhrleitung aufweist.

13. Luft-Kraftstoff-Mischer (1) nach einem der Ansprüche 7 bis 12, wobei die mindestens eine Leitung einen Durchmesser zwischen 1,8 und 2,0 mm, vorzugsweise 1,4 mm aufweist.

14. Gasturbine, umfassend einen Luft-Kraftstoff-Mischer nach einem der Ansprüche 6 bis 13.

15. Dualer ringförmiger gegenläufig drehender Drallerzeuger, umfassend einen inneren Drallerzeuger (5) und einen äußeren Drallerzeuger (6), die koaxial zueinander sind und jeweils eine innere Kammer (51), in der innere Laufschaufeln untergebracht sind, und eine äußere Kammer (61) umfassen, in der äußere Laufschaufeln untergebracht sind, wobei der Drallerzeuger Kraftstoffzufuhrelemente (71, 72) umfasst, die angepasst sind, um Kraftstoff nur innerhalb der inneren Kammer (51) zuzuführen, und die äußere Kammer (61) kein Kraftstoffeinspritzelement aufweist.

## Revendications

1. Procédé pour la réduction des émissions de NOx dans une turbine à gaz dans lequel un flux d'air primaire et un flux de carburant sont alimentés dans un mélangeur air-carburant (1) équipé d'au moins un dispositif de tourbillonnement contrarotatif annulaire double (4) ayant des chambres annulaires interne et externe (51, 61), ledit flux d'air primaire étant alimenté dans les chambres annulaires interne et externe (51, 61),
dans lequel le procédé comprend l'étape consistant à injecter de manière centripète le flux de carburant uniquement dans la chambre annulaire interne (51) du dispositif de tourbillonnement par l'intermédiaire d'un point d'injection situé dans la chambre annulaire interne (51) adjacente à la chambre annulaire externe (61) et la chambre externe (61) est dépourvue de l'un quelconque élément d'injection de carburant.

2. Procédé selon la revendication 1, dans lequel il est prévu d'injecter le flux de carburant dans une direction transversale par rapport à un axe du dispositif de tourbillonnement.

3. Procédé selon une ou plusieurs des revendications précédentes, comprenant l'étape consistant à alimenter le flux de carburant dans la chambre interne (51) au moins à travers un chemin transversal d'alimentation passant dans la chambre externe (61) et se terminant dans la chambre interne (51).

4. Procédé selon une ou plusieurs des revendications précédentes, dans lequel le dispositif de tourbillonnement (4) comprend des lames externes (62) logées dans la chambre externe (61) et des aubes externes définies par deux lames externes adjacentes, dans lequel chaque lame externe (62) est pourvue d'au moins un chemin transversal d'alimentation.

5. Procédé selon une ou plusieurs des revendications précédentes, dans lequel le dispositif de tourbillonnement (4) comprend des lames internes (52) logées dans la chambre interne (51) et des aubes internes définies par deux lames internes (52) adjacentes, le carburant étant injecté dans chaque aube interne par deux chemins transversaux d'alimentation.

6. Mélangeur air-carburant (1) pour turbine à gaz, comprenant :
un conduit d'air primaire (2) pour alimenter en air primaire,
un conduit de carburant (3) pour alimenter en carburant, en particulier en gaz,
un dispositif de tourbillonnement contrarotatif annulaire double (4), à son tour comprenant un dispositif de tourbillonnement interne (5) et un dispositif de tourbillonnement externe (6) coaxiaux l'un par rapport à l'autre et comprenant respectivement une chambre interne (51) et une chambre externe (61),
ledit conduit d'air primaire (2) étant en communication de flux avec le dispositif de tourbillonnement interne (5) et le dispositif de tourbillonnement externe (6),
dans lequel ledit mélangeur air-carburant (1) comprend en outre un élément d'alimentation en carburant (71, 72) raccordé de manière opérationnelle audit conduit de carburant (3), ledit élément d'alimentation en carburant (7) étant adapté pour alimenter en carburant uniquement l'intérieur de ladite chambre interne (51) et la chambre externe (61) est dépourvue de l'un quelconque élément d'injection de carburant.

7. Mélangeur air-carburant (1) selon la revendication 6, dans lequel l'élément d'alimentation en carburant (71, 72) est constitué d'au moins un tuyau raccordé de manière opérationnelle au conduit de carburant (3) et se terminant dans la chambre interne (51).

8. Mélangeur air-carburant (1) selon la revendication 6 ou 7, dans lequel ledit élément d'alimentation en carburant (71, 72) passe au moins en partie, de préférence complètement, à travers la chambre externe (61).

9. Mélangeur air-carburant (1) selon la revendication 8, dans lequel le dispositif de tourbillonnement externe (6) comprend des lames externes (62), dans lequel l'élément d'alimentation en carburant (71, 72) comprend un premier tuyau d'alimentation en carburant transversal (71) logé au moins en partie, de préférence complètement, à l'intérieur desdites lames externes (62).

10. Mélangeur air-carburant (1) selon les revendications 8 ou 9, dans lequel l'élément d'alimentation en carburant (71, 72) comprend en outre un second tuyau d'alimentation en carburant transversal (72) logé au moins en partie, de préférence complètement, à l'intérieur de ladite chambre externe (61), de préférence à l'intérieur desdites lames externes (62).

11. Mélangeur air-carburant (1) selon la revendication 9 ou 10, dans lequel ledit dispositif de tourbillonnement contrarotatif annulaire double comprend un moyeu de division (56) entre ladite chambre interne et externe, ledit tuyau d'alimentation en carburant (71, 72) s'ouvrant dans la chambre interne au niveau dudit moyeu de division.

12. Mélangeur air-carburant (1) selon les revendications 9 et 10, dans lequel ledit premier tuyau d'alimentation en carburant transversal (71) est proche dudit conduit d'air primaire (2) et ledit second tuyau d'alimentation en carburant transversal (72) est éloigné dudit conduit d'air primaire (2), ledit premier tuyau d'alimentation en carburant transversal (71) ayant une zone de passage plus grande que ladite zone de passage du second tuyau d'alimentation en carburant transversal.

13. Mélangeur air-carburant (1) selon l'une quelconque des revendications 7 à 12, dans lequel l'au moins un tuyau a un diamètre compris entre 1,8 et 2,0 mm, de préférence 1,4 mm.

14. Turbine à gaz comprenant un mélangeur air-carburant selon l'une quelconque des revendications allant de 6 à 13.

15. Dispositif de tourbillonnement contrarotatif annulaire double, comprenant un dispositif de tourbillonnement interne (5) et un dispositif de tourbillonnement externe (6) coaxiaux l'un par rapport à l'autre et comprenant respectivement une chambre interne (51) logeant des lames internes et une chambre externe (61) logeant des lames externes, dans lequel le dispositif de tourbillonnement comprend des éléments d'alimentation en carburant (71, 72) adaptés pour alimenter en carburant uniquement l'intérieur de ladite chambre interne (51) et la chambre externe (61) est dépourvue de l'un quelconque élément d'injection de carburant.
